# DEMANDE DE BREVET EUROPEEN

(11) **EP 1 371 445 A1**
(43) Date de publication de la demande: **17.12.2003**
(21) Numéro de dépôt: 03291229.7
(22) Date de dépôt: 23.05.2003
(51) Int. Cl.: B23K 26/12, B23K 35/38, B23K 26/32

(54) **Utilisation de mélanges gazeux hélium/azote en soudage laser jusqu'à 12 kW**

(30) Priorité: 14.06.2002 FR 0207345
(71) Demandeur: L'Air Liquide S. A. à Directoire et Conseil de Surveillance pour l'Etude et l'Exploitation des Procédés Georges Claude, 75321 Paris Cedex 07 (FR)
(72) Inventeur: Briand, Francis, 75009 Paris (FR); Chouf, Karim, 93380 Epinay S/Seine (FR); Lefebvre, Philippe, 95310 Saintouen l'Aumone (FR); Verna, Eric, 95650 Boissy l'Aillerie (FR)
(74) Mandataire: Pittis, Olivier

(57) **Abrégé**

Mélange gazeux binaire pour soudage par faisceau laser allant jusqu'à 12 kW constitué de 30% à 60% en volume d'azote et d'hélium pour le reste (jusqu'à 100%). Application de ce mélange gazeux au soudage de l'acier, des aciers inoxydables ou du titane.

## Description

La présente invention concerne un mélange gazeux formé uniquement d'hélium et d'azote et son utilisation dans un procédé de soudage laser à une puissance maximale de 12 kW.

Le soudage par faisceau laser est un procédé d'assemblage très performant car il permet d'obtenir, à des vitesses élevées, des profondeurs de pénétration très importantes si on les compare à d'autres procédés plus traditionnels, tel le soudage plasma, le soudage MIG (Métal Inert Gas) ou le soudage TIG (Tungsten Inert Gas).

Ceci s'explique par les fortes densités de puissances mises en jeu lors de la focalisation, par un ou plusieurs miroirs ou lentilles, du faisceau laser au niveau du plan de jonction des pièces à souder, par exemple des densités de puissance pouvant dépasser 10⁶ W/cm²

Ces fortes densités de puissance provoquent une forte vaporisation à la surface des pièces qui, en se détendant vers l'extérieur, induit un creusement progressif du bain de soudage et conduit à la formation d'un capillaire de vapeur étroit et profond, appelé *"keyhole"* en anglais (= "trou de serrure") dans l'épaisseur des tôles, c'est-à-dire au niveau du plan de joint.

Ce capillaire permet un dépôt direct de l'énergie du faisceau laser en profondeur dans la tôle et ce, par opposition avec les procédés de soudage plus conventionnels où le dépôt d'énergie est localisé à la surface.

A ce titre, on peut citer les documents suivants : DE-A-2713904, DE-A-4034745, JP-A-01048692, JP-A-56122690, WO 97/34730, JP-A-01005692, DE-A-4123716, JP-A-02030389, US-A-4,871,897, JP-A-230389, JP-A-62104693, JP-A-15692, JP-A-15693, 3P-A-15694, JP-A-220681, JP-A-220682, 3P-A-220683, WO-A-88/01553, WO-A-98/14302 DE-A-3619513 et DE-A-3934920.

Ce capillaire est constitué d'un mélange de vapeurs métalliques et de plasma de vapeurs métalliques dont la particularité est d'absorber le faisceau laser et donc de piéger l'énergie au sein du capillaire même.

Une des problématiques du soudage laser est la formation d'un plasma de gaz de couverture.

En effet, ce plasma de vapeurs métalliques, en ensemençant en électrons libres le gaz de couverture ou gaz de protection, peut déclencher l'apparition d'un plasma de gaz de couverture qui est préjudiciable à l'opération de soudage.

Le faisceau laser incident peut alors être fortement perturbé par le plasma de gaz de couverture.

L'interaction du plasma de gaz de couverture avec le faisceau laser peut prendre diverses formes mais, le plus souvent, cela se traduit par un effet d'absorption et/ou de diffraction du faisceau laser incident qui peut conduire à une réduction importante de la densité de puissance laser efficace à la surface de la cible, entraînant une diminution de la profondeur de pénétration, voire à une perte de couplage entre le faisceau et la matière et donc à une interruption momentanée du processus de soudage.

Le seuil de densité de puissance à partir duquel le plasma apparaît dépend du potentiel d'ionisation du gaz de couverture utilisé et est inversement proportionnel au carré de la longueur d'onde du faisceau laser.

Ainsi, il est très difficile de souder sous argon pur avec un laser de type CO₂, tandis que cette opération peut être réalisée avec beaucoup moins de problème avec un laser de type YAG.

En général, en soudage laser CO₂, on utilise comme gaz de couverture de l'hélium qui est un gaz à haut potentiel d'ionisation et qui permet de se prémunir de l'apparition du plasma de gaz de couverture et ce, jusqu'à une puissance laser d'au moins 45kW.

L'hélium a cependant l'inconvénient d'être un gaz onéreux et de nombreux utilisateurs de laser préféraient utiliser d'autres gaz ou mélanges gazeux moins onéreux que l'hélium mais qui permettraient néanmoins de limiter l'apparition du plasma de gaz de couverture et donc d'obtenir des résultats de soudage similaires à ceux obtenus avec l'hélium mais à un coût moindre.

Ainsi, il existe au plan commercial des mélanges gazeux contenant de l'argon et de l'hélium, par exemple le mélange gazeux contenant 30 % en volume d'hélium et le reste étant de l'argon, commercialisé sous l'appellation LASAL™ 2045 par la société L'AIR LIQUIDE™, lesquels permettent d'obtenir sensiblement les mêmes résultats que l'hélium, pour des puissances laser CO₂ inférieures à 5kW et pourvu que les densités de puissance engendrées ne soient pas trop importantes, c'est-à-dire environ supérieures à 2000 kW/cm².

Cependant, le problème qui se pose avec ce type de mélange Ar/He est que pour des densités de puissance laser plus importantes, il n'est plus adapté car le seuil de création du plasma de gaz de protection est alors dépassé.

Par ailleurs, il est aussi primordial que la pénétration des cordons de soudure soit au minimum maintenue, voire préférentiellement augmentée par rapport au même procédé de soudage laser utilisant de l'hélium.

En outre, encore un autre problème réside dans la formation des espèces de type NOx néfastes pour le soudeur qui doit être aussi faible que possible.

En effet, les températures de plasma métallique, résultant d'interactions laser/matière aussi puissantes que celles impliquées dans le soudage laser, favorisent la dissociation des molécules d'azote et d'oxygène provenant de pollutions atmosphérique et conduisent à former des espèces nuisibles de type NOx.

Dès lors, pour éviter ou réduire la production d'espèces de type NOx, il est indispensable de pouvoir obtenir une diminution de la température du plasma métallique résultant du soudage laser.

Le but de la présente invention est alors de proposer un mélange gazeux de soudage à base d'azote et un procédé de soudage par laser utilisant ce gaz, pouvant être utilisé avec un laser de puissance jusqu'à 12 kW, lequel gaz conduise à l'obtention d'un plasma métallique moins chaud, à une pénétration totale de 5 à 10 % supérieure à celle obtenue avec les gaz traditionnellement utilisés à de telles puissances laser, à savoir l'hélium, selon la puissance et la teneur en azote du gaz et à une diminution de la formation des NOx par rapport à de l'hélium pris seul.

La solution de l'invention est alors un mélange gazeux binaire pour soudage par faisceau laser jusqu'à 12 kW constitué de 30% à 60% en volume d'azote et d'hélium pour le reste (jusqu'à 100%).

Selon le cas, le gaz de l'invention peut comprendre l'une ou plusieurs des caractéristiques techniques suivantes :
- il contient moins de 59% en volume d'azote, de préférence moins de 58% d'azote, de préférence moins de 55%.
- il contient plus de 50% d'azote, de préférence plus de 52% d'azote.
- il contient préférentiellement de 53% à 55% d'azote.

Selon un autre aspect, l'invention porte aussi sur un procédé de soudage par faisceau laser ayant une puissance allant jusqu'à 12 kW, dans lequel on utilise un mélange gazeux selon l'invention pour souder des pièces en acier, en acier inoxydable, ou en titane.

Selon le cas, le procédé de l'invention peut comprendre l'une ou plusieurs des caractéristiques techniques suivantes :
- le laser est de type CO₂.
- on réalise un soudage à moins pénétration partielle de manière à assembler deux pièces à souder l'une avec l'autre, de préférence à pleine pénétration.
- on utilise un laser ayant une puissance de 0.5 à 12 kW, de préférence entre 4 et 10 kW.
- on soude des pièces ayant une épaisseur allant de 0.4 à 30 mm, de préférence de 1 mm à 10 mm.
- les pièces sont en acier HLES (Acier à Haute Limite Elastique).
- les pièces à souder ont un revêtement surfacique de zinc, en particulier des tôles d'acier électrozinguées ou galvanisées.
- les pièces à souder sont disposées et soudées à clin, en bord-à-bord, par transparence ou en angle et avec ou sans chanfrein.
- le soudage se fait par tâche focale mono ou multi-spots (impact).
- la tâche focale est circulaire ou oblongue.
- le débit de gaz est compris entre 5 l/min et 100 l/min.
- la pression du gaz est comprise entre 1 et 5 bars.
- la buse distribuant le gaz est une buse latérale ou axiale ayant un diamètre allant de 3 à 30 mm.

### Exemple : Mesure de la pénétration de lignes de fusion réalisées avec un laser CO₂ et des gaz de protection constitués de mélanges He/N₂

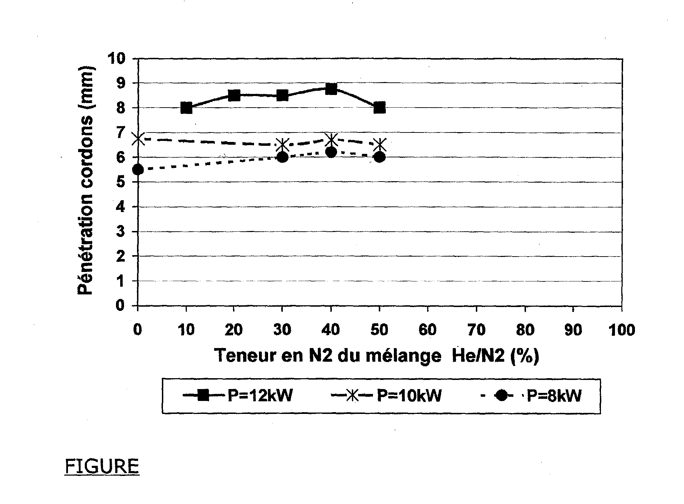

Les courbes sur la figure ci-annexée représentent des mesures de la pénétration de lignes de fusion réalisées avec un laser de type CO₂ (pour des puissances allant 8 kW à 12 kW) focalisé à la surface d'une cible métallique en acier doux par un miroir parabolique possédant une distance focale de 200 mm, et pour des teneurs variables en hélium et en azote du gaz de protection.

Plus précisément, le gaz de protection est constitué de mélanges He/N₂ dont la teneur en azote a été progressivement augmentée (le reste du mélange étant uniquement de l'hélium).

Pour chaque courbe, la teneur en azote du mélange utilisé est reportée en pourcentage volumique sur l'axe des abscisses.

Le gaz est distribué dans la zone d'interaction par une buse latérale de forme cylindrique de diamètre 12 mm, à un débit de 24 l/min. La vitesse de soudage est de 3 m/min.

On peut voir sur les courbes ci-annexées que la pénétration des cordons de soudure est au minimum conservée pour des puissances laser comprises entre 8 et 12 kW; dans certains cas, on observe même une augmentation de la pénétration des cordons de l'ordre de 5 à 10%.

Lors de la réalisation de ces cordons, il a été constaté qu'il se formait un 'plasma' et/ou 'panache' dans le gaz de protection au-dessus de la zone d'interaction et de la plume de plasma métallique. Les dimensions de celui-ci dépendaient de la teneur en azote du mélange, de la densité de puissance laser incidente et de la longueur focale et de la vitesse de soudage. A priori, il peut atteindre des dimensions importantes allant jusqu'à plusieurs centimètres.

Il semble que la formation de ce plasma et/ou panache dans le gaz de protection est lié à la présence de la molécule et/ou de l'atome d'azote, à proximité de la zone d'interaction. Les conséquences liées de la présence de ce plasma et/ou panache gazeux autour de la zone d'interaction sont différentes de celles observées pour les mélanges He/Ar.

En effet, contrairement aux mélanges He/Ar où l'ionisation de l'atome argon au cours de processus de soudage laser entraînait la formation d'un plasma dans le gaz de protection qui pouvait être néfaste au processus de soudage laser, le plasma et/ou panache gazeux obtenu avec des mélanges He/N₂ ne nuit pas au procédé de soudage.

Dans le cas des mélanges He/N₂, le couplage entre la matière et le faisceau laser est conservé, voire parfois amélioré. Seules de teneurs en azote importantes dans le mélange He/N₂ nuit significativement au couplage laser/matière.

L'amélioration de la pénétration semble résulter d'un refroidissement de la plume de plasma métallique induit par la dissociation de la molécule d'azote du mélange à son contact.

Cela conduirait alors à une diminution de la taille de la plume de plasma métallique à la surface de la tôle et à une diminution du phénomène d'absorption du faisceau laser incident par cette dernière, et une augmentation de la quantité d'énergie laser disponible à la surface de la tôle et dans le capillaire.

De plus, la recombinaison exothermique des d'atomes ou ions d'azote à la surface des parois du capillaire doivent aussi contribuer à l'amélioration du procédé.

En outre, il a été également mis en évidence durant les essais utilisant des mélanges He/N₂, une diminution notable de la quantité de NOx générés suivant les teneurs en azote et les densités de puissance laser impliquées, par rapport à la quantité de NOx générée avec de l'hélium seul.

En effet, la dissociation de la molécule d'azote, lors de son injection dans la zone d'interaction laser/matière, absorbe une partie de l'énergie du plasma métallique et le refroidit.

Cela explique partiellement la diminution de la formation d'espèce NOx autour de la plume de plasma métallique au cours de soudage laser, lors du processus de soudage laser.

La mesure du taux de NOx émis au cours du processus de soudage laser s'est fait à une vitesse de l'ordre de 3 m/min pour des puissances laser de 2kW et 8kW. Le gaz de protection est apporté latéralement au déplacement par une buse de 8 mm de diamètre à 20 1/min. Différents mélanges He/N₂ ont été utilisés. Le prélèvement est effectué par une sonde en inox de 3 mm de diamètre qui aspire l'ensemble des gaz émis par le processus de soudage. Les gaz recueillis passent ensuite dans un analyseur normalisé capable de détecter les éléments de type NOx et de quantifier leurs proportions. La sonde de prélèvement est positionnée à 2 cm de la surface de la tôle à 1.5cm de la zone d'interaction, dans le prolongement de l'écoulement gazeux.

Les mesures réalisées sont retranscrites dans le tableau suivant.

**Tableau**

| Mélanges He/N2 | 100%/0 | | 70%/30% | | 50%/50% | | 30%/70% | | 0/100% | |
|---|---|---|---|---|---|---|---|---|---|---|
| (KW) \ (ppm) | NO | NOx | NO | NOx | NO | NOx | NO | NOx | NO | NOx |
| 2kW | 13.5 | 13.5 | | | 2.1 | 2.4 | | | 1.3 | 1.4 |
| 8kW | 70.8 | 70.8 | 40.6 | 40.6 | 33.6 | 33.5 | | | 2 | 2 |

On peut voir une nette diminution des teneurs en NOx émises au cours du processus de soudage laser lorsque la teneur en azote du mélange de gaz de protection He/N2 augmente.

## Revendications

1. Mélange gazeux binaire pour soudage par faisceau laser allant jusqu'à 12 kW constitué de 30% à 60% en volume d'azote et d'hélium pour le reste (jusqu'à 100%).

2. Mélange selon la revendication 1, **caractérisé en ce qu'**il contient moins de 59% d'azote, de préférence moins de 58% d'azote et/ou **en ce qu'**il contient plus de 50% d'azote, de préférence plus de 52% d'azote.

3. Mélange selon l'une des revendications 1 ou 2, caractérisé qu'il contient préférentiellement de 53% à 55% d'azote.

4. Procédé de soudage de pièces en acier, en titane ou en acier inoxydable mettant en oeuvre au moins un faisceau laser ayant une puissance allant jusqu'à 12 kW, dans lequel on utilise un mélange gazeux selon l'une des revendications 1 à 3.

5. Procédé selon la revendication 4, **caractérisé en ce que** le laser est de type CO₂.

6. Procédé selon l'une des revendications 4 ou 5, **caractérisé en ce qu'**on réalise un soudage à moins pénétration partielle de manière à assembler deux pièces à souder l'une avec l'autre, de préférence à pleine pénétration.

7. Procédé selon l'une des revendications 4 à 6, **caractérisé en ce qu'**on utilise un laser ayant une puissance de 0.5 à 12 kW, de préférence de 4 à 10 kW.

8. Procédé selon l'une des revendications 4 à 7, **caractérisé en ce qu'**on soude des pièces ayant une épaisseur allant de 0.4 à 30 mm, de préférence de 1 mm à 10 mm.

9. Procédé selon l'une des revendications 4 à 8, **caractérisé en ce que** les pièces à souder sont en acier ou en acier inoxydable avec revêtement surfacique de zinc.

10. Procédé selon l'une des revendications 4 à 8, **caractérisé en ce que** les pièces à souder sont disposées et soudées à clin, en bord-à-bord, par transparence ou en angle et avec ou sans chanfrein.
